Europäisches Patentamt

European Patent Office

Office européen des brevets

(11) Publication number: **0 111 547**
**B1**

(12) **EUROPEAN PATENT SPECIFICATION**

(45) Date of publication of patent specification: **17.11.88**

(51) Int. Cl.⁴: **C 08 G 59/02, C 08 L 63/00**

(21) Application number: **83902211.8**

(22) Date of filing: **03.06.83**

(86) International application number:
**PCT/US83/00881**

(87) International publication number:
**WO 83/04414 22.12.83 Gazette 83/29**

(54) **ADVANCED EPOXY RESINS AND COATING COMPOSITIONS CONTAINING THE ADVANCED EPOXY RESINS.**

(30) Priority: **10.06.82 US 393969**

(43) Date of publication of application:
**27.06.84 Bulletin 84/26**

(45) Publication of the grant of the patent:
**17.11.88 Bulletin 88/46**

(84) Designated Contracting States:
**DE FR NL**

(56) References cited:
EP-A-0 051 483
GB-A-1 527 258
GB-A-2 001 324
US-A-2 512 996
US-A-2 592 560
US-A-3 336 257
US-A-3 346 532
US-A-3 350 353
US-A-3 445 429
US-A-3 634 323

(73) Proprietor: **THE DOW CHEMICAL COMPANY
2030 Dow Center Abbott Road P.O. Box 1967
Midland, MI 48640 (US)**

(72) Inventor: **HICKNER, Richard A.
334 Linden Lane
Lake Jackson, TX 77566 (US)**
Inventor: **GRAYS, Gwendolyn M.
2419 Wagon Run
Sugarland, TX 77479 (US)**
Inventor: **OWENS, Kevin A.
413 JoAnn Drive, Rt. 3
Angleton, TX 77515 (US)**

(74) Representative: **Hann, Michael, Dr. et al
Patentanwälte Dr. Michael Hann Dr. H.-G.
Sternagel Sander Aue 30
D-5060 Bergisch Gladbach 2 (DE)**

Courier Press, Leamington Spa, England.

**Description**

The present invention concerns advanced epoxy resins and coatings containing same.

Coatings have heretofore been prepared by reacting diglycidyl ethers of dihydric phenols with dihydric phenols and subsequently curing same with a suitable curing agent or, for the very high molecular weight advanced products, merely applying a solution of such resin and evaporating the solvent therefrom. While such coatings have good physical and chemical properties, they are somewhat lacking in flexibility. There are some applications such as automotive primer surfacers, automotive stone chip resistant coatings, and coil coatings where somewhat reduced physical and/or chemical properties can be accepted for an improvement in flexibility or a reduction in the amount of volatile solvent required to achieve the same application viscosity. Also, because the solution coatings contain solvents which must either be recovered or vented into the atmosphere, the latter of which is not environmentally acceptable, solvent recovery systems are required.

US—A—3 336 257 describes the preparation of an epoxy resin by reacting mixtures of diepoxides with diphenols. There is no suggestion of proportions of 2 or more diepoxides nor are there any examples in the reference using a mixture of an aromatic diepoxide and an aliphatic diepoxide.

GB—A—1 527 258 describes an epoxy resin prepared from an aromatic diepoxide and an aliphatic diepoxide but the upper limit of the amount of aliphatic diepoxide is 20 weight percent. Example 7 of this reference only uses 10 weight percent as the largest amount.

The GB—A—2 001 324 teaches epoxy resins prepared from dihydric phenols and diglycidyl ethers of polyethylene and polypropylene glycols. The inclusion of diglycidyl ethers of dihydric phenols is an optional feature. The examples of this reference show that the resins prepared from 100 percent aliphatic diepoxides are preferred. This reference also teaches the use of aminoplasts and phenoplasts as curing agents for the resins.

The reference furthermore describes the use of the epoxy resins in coating compositions.

It is the object of the invention to provide an advanced epoxy resin and a coating composition comprising said resin which avoid the disadvantages of common solution coatings and result in coatings having good physical and chemical properties.

This object is solved by an advanced epoxy resin prepared by reacting in the presence of a suitable catalyst (A) a composition comprising

    (1) at least one aliphatic diepoxide and,

    (2) at least one aromatic diepoxide, with

(B) at least one compound having two aromatic hydroxyl groups per molecule; characterized in that components (A-1) and (A-2) are employed in quantities such that from 10 to 50 percent of the epoxide equivalents contained in component (A) are contributed by component (A-1), from 50 to 90 percent of such epoxide equivalents are contributed by component (A-2), and component (A-1) is present as greater than 20 weight percent and less than 50 mole percent of components (A-1) and (A-2) wherein components (A) and (B) are present in a quantity which results in an advanced epoxy resin having an average epoxide equivalent weight of from 350 to 30,000.

The present invention is also directed to a coating composition comprising

(I) an advanced epoxy resin prepared by reacting in the presence of a suitable catalyst

(A) a composition comprising

    (1) at least one aliphatic diepoxide and, optionally

    (2) at least one aromatic diepoxide; with

(B) at least one compound having two aromatic hydroxyl groups per molecule;

wherein components (A-1) and (A-2) are employed in quantities such that from 10 to 100 percent of the epoxide equivalents contained in component (A) are contributed by component (A-1), from 0 to 90 percent of such epoxide equivalents are contributed by component (A-2), and wherein components (A) and (B) are present in a quantity which results in an advanced epoxy resin having an average epoxide equivalent weight of from 350 to 30,000,

(II) a curing quantity of a curing agent for component (I), and

(III) at least one solvent in a sufficient quantity such that the coating composition including components (I), (II), (III) and any other desirable component has a suitable application viscosity characterized in that the curing agent is a blocked isocyanate.

The object of the invention is also solved by coating composition comprising

(I) an advanced epoxy resin being prepared by reacting in the presence of a suitable catalyst

(A) a composition comprising

    (1) at least one aliphatic diepoxide and, optionally

    (2) at least one aromatic diepoxide; with

(B) at least one compound having two aromatic hydroxyl groups per molecule;

(II) a curing quantity of a curing agent other than a blocked isocyanate for component (I), and

(III) at least one solvent in a sufficient quantity such that the coating composition including components (I), (II), (III) and any other desirable component has a suitable application viscosity,

characterized in that in preparing the advanced epoxy resin the components (A-1) and (A-2) are employed in quantities such that from 10 to 50 percent of the epoxide equivalents contained in component

2

(A) are contributed by component (A-1), from 50 to 90 percent of such epoxide equivalents are contributed by component (A-2), and component (A-1) is present as greater than 20 weight percent and less than 50 mole percent of components (A-1) and (A-2) wherein components (A) and (B) are present in a quantity which results in an advanced epoxy resin having an average epoxide equivalent weight of from 350 to 30,000.

The present invention provides for coatings having improved flexibility and requiring less solvent to achieve desirable application viscosities.

The advanced epoxy resin has an average epoxide equivalent weight preferably of from 350 to 15,000 and most preferably from 350 to 3,000.

The cured advanced epoxy resins of this invention have increased elongation values when cured with a curing quantity of a suitable curing agent as compared to similarly cured advanced resins prepared by reacting together only component (A-2) with component (B). The advanced epoxy resins of this invention require less solvent to reach desired viscosity values as compared to the quantity of solvent to reach a like viscosity value for advanced resins prepared from component (A-2) and component (B).

Suitable aliphatic diepoxides which can be employed herein include the diglycidyl ethers of dihydric aliphatic compounds such as, for example, water, propylene glycol, dipropylene glycol, tripropylene glycol, butylene glycol, dibutylene glycol, tributylene glycol, 1,4-butane diol, 1,6-hexane diol, and mixtures thereof.

Also suitable are the glycidyl ethers of polyoxyalkylene glycols having an average molecular weight of from 200 to 800, preferably from 200 to 400, which polyoxyalkylene glycols are prepared by reacting an aliphatic initiator compound with propylene oxide, butylene oxide or mixtures thereof. Preferred aliphatic diepoxides have an average epoxide equivalent weight of from 123 to 400.

Suitable aromatic diepoxides which can be employed herein include the diglycidyl ethers of polyhydric phenols such as, for example, catechol, resorcinol, hydroquinone, bisphenol A, and mixtures thereof.

Particularly suitable diglycidyl ethers of bisphenols and dihydric phenols which can be employed herein include those mentioned by P. H. Martin in U.S.—A—3,931,109. Preferred aromatic diepoxides are the diglycidyl ethers of bisphenol A having an average epoxide equivalent weight of from 172 to 250.

It is to be understood, that because of the manner in which the commercial epoxy resins prepared from aliphatic dihydric compounds and aromatic dihydric compounds are prepared, these epoxy resins contain minor amounts of monoglycidyl ether products. However, so long as less than 10 percent of the epoxy groups are derived from such monoglycidyl ether products, they are suitable. Suitable such commercially available diglycidyl ethers of aromatic dihydric compounds include D.E.R.® 330 epoxy resin, D.E.R.® 331 epoxy resin, D.E.R.® 332 epoxy resin and D.E.R.® 383 epoxy resin commercially available from The Dow Chemical Company as well as Epon® 825, Epon® 826 and Epon® 828 commercially available from Shell Chemical Company.

Suitable commercially available diglycidyl ethers of aliphatic dihydric compounds include D.E.R.® 732 epoxy resin and D.E.R.® 736 epoxy resin available from The Dow Chemical Company, and Araldite® RD-2 commercially available from Ciba-Geigy.

The quantities of the aliphatic and aromatic epoxy resins and the compound containing two aromatic hydroxyl groups to be employed are those quantities which will provide the desired average epoxide equivalent weight of the advanced epoxy resin.

The percent of aliphatic diepoxide depends upon the particular end use for which the advanced epoxy resin is to be employed.

For example, in automotive primer coatings, the desired percent aliphatic diepoxide is from 10 percent to 30 percent by weight based upon the combined weight of the aliphatic diepoxide and the aromatic diepoxide and the epoxide equivalent weight of the advanced resin is usually from 350 to 700.

For applications as automotive chip resistant coatings, the desired percent aliphatic diepoxide is from 70 percent to 100 percent and the epoxide equivalent weight of the advanced epoxy resin is from 1200 to 3000.

For beverage can coating applications, the desired percent of aliphatic diepoxide is from 10 percent to 25 percent and the epoxide equivalent weight of the advanced resin is from 1400 to 3000.

For coil coating applications, the desired percent of aliphatic diepoxide is from 10 percent to 50 percent and the epoxide equivalent weight of the advanced epoxy resin is from 1400 to 3000.

Suitable solvents which can be employed herein include, for example, ketones such as acetone, methylethyl ketone, methyl n-amyl ketone, methyl isobutyl ketone; glycol ethers such as, for example, the methyl ether of diethylene glycol, the methyl ether of propylene glycol, the n-butyl ether of ethylene glycol; and esters such as, for example, ethyl acetate and butyl acetate.

Suitable solvents also include aromatic compounds, such as, for example, toluene and xylene. It is also understood that mixtures of such solvents can be employed.

Suitable catalysts which can be employed herein in preparing the advanced epoxy resins of the present invention, include any such catalyst suitable for catalyzing the reaction between an epoxy group and a phenolic hydroxyl group. Particularly suitable catalysts include those phosphonium catalysts described by W. O. Perry in U.S.—A—3,948,855 and Dante et al. in U.S.—A—3,447,990.

Suitable curing agents which can be employed in the coating composition of the present invention include, for example, aminoplast resins such as the reaction products of melamine or urea with formaldehyde. Such adducts can be partially or totally etherified with alcohols such as methanol or butanol. Other amino resins would include glycourils, or benzoguanamines. Blocked isocyanates may also be utilized. Typical examples are tolylene diisocyanate, 4,4'-diphenylmethaneisocyanate, a biuret from hexamethylenediisocyanate, a cocyclic trimer of hexamethylenediisocyanate and tolylene diisocyanate blocked with phenols such as phenol, 4-chlorophenol, o-sec-butylphenol, lactams such as caprolactam, and oximes such as acetaldehydeoxime or methylethylketoxime. Also useful are those prepolymers prepared by reacting diols or triols with diisocyanate such as, e.g. tolylene diisocyanate, hexamethylene diisocyanate or isophorone diisocyanate blocked with the aforementioned phenols. Coatings capable of curing at room temperature can be obtained by use of the aforementioned isocyanates which contain no blocking agent.

The coating compositions of the present invention may also contain, if desired, colorants, dyes, pigments, fillers, levelling agents, and mixtures thereof.

The following examples are illustrative of the present invention.

The following components were employed in the examples.

Aliphatic diepoxide A was a diglycidyl ether of polyoxypropylene glycol, said glycol having an average molecular weight of 400 and said diglycidyl ether having an average epoxide equivalent weight (EEW) of 311.

Aliphatic diepoxide B was a diglycidyl ether of dipropylene glycol having an average EEW of 195.

Aliphatic diepoxide C was a diglycidyl ether of dipropylene glycol having an average EEW of 176.

Aromatic diepoxide A was a diglycidyl ether of bisphenol A having an average EEW of 189.

Dihydric phenol A was bisphenol A.

Examples 1 thorugh 7 and Comparative Run A

Preparation of advanced epoxy resin

A series of advanced epoxy resins were prepared from an aromatic diepoxide with varying quantities of aliphatic diepoxide and bisphenol A (BPA). The catalyst employed was a 70 percent solution of ethyltriphenyl phosphonium acetate · acetic acid complex in methanol. In each instance, the mixture of epoxy resins and bisphenol A were heated to between 70°C and 90°C whereupon they formed clear solutions after which the catalyst was added and heating continued to 150°C whereupon the solution was permitted to exotherm. The solutions were heated for an additional time and temperature. After cooling, the advanced resin was diluted to 85 percent non-volatiles in toluene. The quantities, reaction conditions and results are given in Table I.

Binder compositions

The advanced resins prepared in A above were blended with a sufficient quantity of a solvent composition consisting of 100 parts by weight (pbw) of methyl ethyl ketone, 100 pbw xylene, 200 pbw toluene and 100 pbw 2-(ethoxy)ethylacetate so as to provide a viscosity employing a No. 2 Zahn cup of 38 seconds.

The percent non-volatiles and percent total solvent (includes solvent employed during preparation of advanced resin) required to provide the 38 seconds viscosity employing a No. 2 Zahn cup are given in Table I.

Preparation of paints

Binder compositions were made using sufficient quantities of the solutions prepared in (B) above to provide 30 grams of non-volatile resin, 4.5 g of hexamethyoxymelamine, commercially available from American Cyanamid Co. as Cymel® 303, 1.5 weight percent of a 40 percent solution of p-toluenesulfonic acid in isopropanol and an additional 3 g of solvent blend. The binder compositions were then blended with a pigment composition consisting of 7.67 weight percent of ferric oxide, 7.67 weight percent of titanium dioxide, 7.67 weight percent of ASP 400 clay, 75 weight percent of barytes and 2 weight percent of zinc chromate in a ratio of 2 parts of pigment to one part by weight of binder. The binder/pigment blend was placed in a steel cylinder and a volume of steel shot equal to the volume of the binder/pigment blend was added and the cylinder was shaken on paint shaker for 15 minutes (900 s). The contents were filtered to remove the steel shot and the paint aged overnight at (140°F) 60°C prior to use.

Films of these paint compositions were applied to polished cold rolled steel panels or unpolished Bonderite® 40 panels with a number 22 wire wound Meyer rod. The panels were baked 30 minutes (1800 s) at (325°F) 163°C. Solvent resistance was determined by rubbing the coating with a (2-pound) 0.9 kg ballpein hammer where the hammer head was covered with gauze and soaked in methyl ethyl ketone. The number of double rubs, a push-pull motion, observed until a marring of the coating occurred was recorded.

The solids content of the point was determined by heating two grams of the sample at 150°C in a vacuum oven for 2 hours (7200 s).

The salt spray resistance was carried out in a salt fog cabinet employing the procedure of ASTM B117-73.

The results are given in Table I.

TABLE I

| Epoxy resin preparation | Examples | | | |
|---|---|---|---|---|
| | 1 | 2 | 3 | 4 |
| Aliphatic resin | | | | |
| Type/pbw[1]/EE[2] | B/40/0.205 | B/80/0.41 | B/120/0.615 | B/200/1.026 |
| % Epoxide equiv.[4] | 9.67 | 19.5 | 29.34 | 49.23 |
| Aromatic resin | | | | |
| Type/pbw/EE | A/360/1.915 | A/320/1.693 | A/280/1.481 | A/200/1.058 |
| % Epoxide equiv.[4] | 90.33 | 80.5 | 70.66 | 50.77 |
| Dihydric phenol | | | | |
| Type/pbw/OHE[3] | A/105.6/0.926 | A/104.2/0.915 | A/101.8/0.893 | A/95.8/0.840 |
| Advanced resin EEW | 425—430 | 425—430 | 425—430 | 425—430 |
| Catalyst, pbw | 0.4 | 0.4 | 0.4 | 0.4 |
| Exotherm temp. °C | 172 | 175 | 175 | 170 |
| Post heat | | | | |
| Temp., °C | 175 | 175 | 175 | 170 |
| Time, hrs/secs | 1/3600 | 1/3600 | 1/3600 | 1/3600 |
| Binder composition | | | | |
| % Non-volatiles | 59.7 | 59.4 | 59 | 63.7 |
| % Solvent | 40.3 | 40.6 | 40 | 36.3 |
| Paint composition | | | | |
| MEK Rubs | 37 | 35 | 29 | 25 |
| Salt spray | | | | |
| 32nds of an inch | 2 | 2—3 | 1—2 | — |
| mm | 1.6 | 1.6—2.4 | 0.8—1.6 | — |

TABLE I (continued)

| Epoxy resin preparation | Examples and Comparative Run | | | |
|---|---|---|---|---|
| | 5 | 6 | 7 | A |
| Aliphatic resin | | | | |
| Type/pbw[1]/EE[2] | A/80/0.257 | A/120/0.386 | A/200/0.643 | — |
| % Epoxide equiv.[4] | 13.18 | 20.67 | 37.8 | 0 |
| Aromatic resin | | | | |
| Type/pbw/EE | A/320/1.693 | A/280/1.481 | A/200/1.058 | A/400/2.116 |
| % Epoxide equiv.[4] | 86.82 | 79.33 | 62.2 | 100 |
| Dihydric phenol | | | | |
| Type/pbw/OHE[3] | A/93.6/0821 | A/89.5/0.785 | A/66.8/0.586 | A/106/0.937 |
| Advanced resin EEW | 425—430 | 425—430 | 425—430 | 425—430 |
| Catalyst, pbw | 0.4 | 0.4 | 0.4 | 0.4 |
| Exotherm temp. °C | 180 | 170 | 160 | 180 |
| Post heat | | | | |
| Temp., °C | 175 | 175 | 170 | 175 |
| Time, hrs/secs | 1/3600 | 1/3600 | 1/3600 | 1/3600 |
| Binder composition | | | | |
| % Non-volatiles | 59.3 | 61.3 | 67.1 | 56 |
| % Solvent | 40.7 | 38.7 | 32.9 | 44 |
| Paint composition | | | | |
| MEK Rubs | 15 | 15 | — | — |
| Salt spray | | | | |
| 32nds of an inch | 2—6 | 1—6 | — | — |
| mm | 1.6—4.8 | 0.8—4.8 | — | — |

[1] pbw=parts by weight.
[2] EE=epoxide equivalents.
[3] OHE=hydroxide equivalents.
[4] Percent epoxide equivalents contributed by this resin based upon total epoxide groups.

Example 8

An advanced resin having an average EEW of 1800 was prepared by reacting 324.8 grams (1.845 epoxide equivalents) of aliphatic diepoxide C and 175.2 grams (1.537 phenolic OH equivalents) of bisphenol A in the presence 0.461 grams of a 70 percent solution of ethyltriphenyl phosphonium acetate · acetic acid complex in methanol. The peak exotherm was 200°C and heating was continued thereafter at 175°C for 1.5 hours (5400 s). The resultant product was diluted to 80 percent solids by weight with the monomethyl ether of propylene glycol. A 408 g sample of the 80 percent solids solution was diluted to 70 percent solids by the addition of 63.6 g of 2-methoxypropanol acetate. The resultant solution had a Gardner viscosity of $Z^+$ (~2300 cps) ~2.3 Pa · s at 25°C.

Examples 9 and 10 and Comparative Run B

Example 8 was repeated employing 243.6 grams (1.38 epoxide equivalents) of aliphatic diepoxide C (75 weight percent), 81.2 grams (0.43 epoxide equivalents) of aromatic diepoxide A (25 weight percent) and 175.2 grams (1.537 phenolic hydroxyl equivalents) of bisphenol A and 0.464 grams of catalyst solution. The peak exotherm was observed to be 204°C. A sample of the resin at 80 percent solids was diluted further with 2-methoxypropanol acetate to give a 60 percent solids solution. This solution had a Gardner viscosity of X—Y at 25°C.

A similar product designated Example 10, was prepared using a blend of 50 percent of aliphatic diepoxide C and 50 percent of aromatic diepoxide A.

Preparation of methyl ethyl ketoxime blocked prepolymer

A one-liter five-necked flask was charged with 174.2 g (2.0 eq) of 80/20, 2,4-, 2,6-tolylene diisocyanate. The flask was heated to 50°C and 205 g (1.0 eq) of a polyoxypropylene glycol having an average molecular weight of 425 containing 0.87 g of dibutyl tin dilaurate solution (10 percent solids in methyl ethyl ketone)

6

was added during 35 minutes (2100 s) while maintaining the temperature between 65° and 73°C. Fifty grams of methyl ethyl ketone was added to facilitate stirring. Heating was continued an additional 40 minutes (2400 s) at 55°C. Methyl ethyl ketoxime (87.1 g, 1.0 eq) was added over a 20 minute (1200 s) period while applying cooling to keep the temperature below 55°C. An additional 25 g of methyl ethyl ketone and 25 g of 2-methoxypropanol was added to give a total of 100 g of solvent or 82.3 percent solids. The product was a deep yellow liquid which partially crystallized on standing. A 410 g sample at 82.3 percent solids was diluted further with 79.5 g methyl ethyl ketone and 18 g of 2-methoxypropanol to give a 77.5 percent solids solution.

The products of Examples 8, 9 and 10 were compared to an epoxy resin of 1800 epoxide equivalent weight prepared only from aromatic diepoxide A and bisphenol A. It is sold commercially by The Dow Chemical Company as D.E.R.® 667 epoxy resin. The epoxy resins were blended at the ratio of 100 parts of epoxy resin to 50 parts of the blocked isocyanate of Example 4 (solids basis) and 1 part of dibutyl tin dilaurate (T12 catalyst) to 100 parts of blocked isocyanate.

Films were drawn down on unpolished cold rolled steel panels using a number 40 wire wound rod and baked for 30 minutes (1800 s) at (300°F) 149°C or (275°F) 135°C. The films were evaluated for MEK double rubs, reverse impact and X-adhesion. Reverse impact resistance was measured according to ASTM D-2794. The letter "P" signifies pass and the letter "F" signifies fail. The latter test was performed by scribing an X on a panel with a razor blade and pulling with Scotch Brand 610 tape. A pass represents no loss of adhesion where as a fail indicates removal of film from all four quadrants of the X-batch. The results are tabulated in Table II.

TABLE II
Evaluation of 1800 EEW resins with blocked isocyanate

| Epoxy resin | Example 8 | Example 9 | Example 10 | Comparative Run B |
|---|---|---|---|---|
| Aliphatic diepoxide C, % | 100 | 75 | 50 | 0 |
| Aromatic diepoxide A, % | 0 | 25 | 50 | 100 |
| EEW of Advanced resin | 1765 | 1900 | 1765 | 1775 |
| Epoxy solids, pbw | 80.0 | 72.9 | 73.3 | 70.0 |
| Epoxy solution, pbw | 114.3 | 121.5 | 122.2 | 140.0 |
| Blocked NCO solids, pbw | 40.0 | 36.5 | 36.6 | 35.0 |
| Blocked NCO solution, pbw | 51.6 | 47.1 | 47.2 | 45.1 |
| T-12 Catalyst, pbw, 10% solution in MEK | 4.0 | 3.6 | 3.7 | 3.5 |
| % Solids of blend | 70.8 | 64.4 | 64.3 | 57.9 |
| Gardner viscosity of blend | Y—Z | X—Y | Z | Z-1 |
| Viscosity, (cps) of blend Pa · s | (~1900) ~1.9 | (~1500) ~1.5 | (~2300) ~2.3 | (~2700) ~2.7 |
| Cure 1800 s @ (300°F) 149°C Reverse impact, (in-lbs) (m-kg) | (P160) 1.84 | (P160) 1.84 | (P160) 1.84 | (P80, F100) 0.92, 1.15 |
| MEK Rubs | 15 | 17 | 45 | 75 |
| Adhesion | Pass | Pass | Pass | Fail 25% |
| Cure 1800 s @ (275°F) 135°C Reverse impact, (in-lbs) (m-kg) | (P160) 1.84 | (P160) 1.84 | (P80, F100) 0.92, 1.15 | (F40) 0.46 |
| MEK Rubs | 15 | 13 | 25 | 65 |
| Adhesion | Pass | Fail | Fail | Fail |

7

# EP 0 111 547 B1

**Claims**

1. An advanced epoxy resin prepared by reacting in the presence of a suitable catalyst
   (A) a composition comprising
      (1) at least one aliphatic diepoxide and,
      (2) at least one aromatic diepoxide, with
   (B) at least one compound having two aromatic hydroxyl groups per molecule;
   characterized in that components (A-1) and (A-2) are employed in quantities such that from 10 to 50 percent of the epoxide equivalents contained in component (A) are contributed by component (A-1), from 50 to 90 percent of such epoxide equivalents are contributed by component (A-2), and component (A-1) is present as greater than 20 weight percent and less than 50 mole percent of components (A-1) and (A-2) wherein components (A) and (B) are present in a quantity which results in an advanced epoxy resin having an average epoxide equivalent weight of from 350 to 30,000.

2. The advanced epoxy resin of Claim 1 characterized in that components (A) and (B) are employed in a ratio such that the resultant epoxy resin has an average epoxide equivalent weight of from 350 to 15,000.

3. The advanced epoxy resin of Claim 1 characterized in that components (A) and (B) are employed in a ratio such that the resultant epoxy resin has an average epoxide equivalent weight of from 350 to 3,000.

4. The advanced epoxy resin of Claim 3 characterized in that component (A-1) is a diglycidyl ether of a polyoxypropylene glycol or dipropylene glycol; component (A-2) is a diglycidyl ether of a bisphenol and component (B) is a bisphenol.

5. The advanced epoxy resin of Claim 3 characterized in that
   (a) component (A-1) has an average epoxide equivalent weight of from 123 to 400 and
   (b) component (A-2) is a diglycidyl ether of bisphenol A having an average epoxide equivalent weight of from 172 to 250.

6. A coating composition comprising
   (I) an advanced epoxy resin prepared by reacting in the presence of a suitable catalyst
   (A) a composition comprising
      (1) at least one aliphatic diepoxide and, optionally
      (2) at least one aromatic diepoxide; with
   (B) at least one compound having two aromatic hydroxyl groups per molecule;
   wherein components (A-1) and (A-2) are employed in quantities such that from 10 to 100 percent of the epoxide equivalents contained in component (A) are contributed by component (A-1), from 0 to 90 percent of such epoxide equivalents are contributed by component (A-2), and wherein components (A) and (B) are present in a quantity which results in an advanced epoxy resin having an average epoxide equivalent weight of from 350 to 30,000,
   (II) a curing quantity of a curing agent for component (I), and
   (III) at least one solvent in a sufficient quantity such that the coating composition including components (I), (II), (III) and any other desirable component has a suitable application viscosity
   characterized in that the curing agent is a blocked isocyanate.

7. A coating composition comprising
   (I) an advanced epoxy resin being prepared by reacting in the presence of a suitable catalyst
   (A) a composition comprising
      (1) at least one aliphatic diepoxide and, optionally
      (2) at least one aromatic diepoxide; with
   (B) at least one compound having two aromatic hydroxyl groups per molecule;
   (II) a curing quantity of a curing agent other than a blocked isocyanate for component (I), and
   (III) at least one solvent in a sufficient quantity such that the coating composition including components (I), (II), (III) and any other desirable component has a suitable application viscosity,
   characterized in that in preparing the advanced epoxy resin the components (A-1) and (A-2) are employed in quantities such that from 10 to 50 percent of the epoxide equivalents contained in component (A) are contributed by component (A-1), from 50 to 90 percent of such epoxide equivalents are contributed by component (A-2), and component (A-1) is present as greater than 20 weight percent and less than 50 mole percent of components (A-1) and (A-2) wherein components (A) and (B) are present in a quantity which results in an advanced epoxy resin having an average epoxide equivalent weight of from 350 to 30,000.

8. A coating composition of Claims 6 or 7 characterized in that components (A) and (B) are present in quantities such that the resultant advanced epoxy resin has an average epoxide equivalent weight of from 350 to 15,000.

9. A coating composition of Claims 6 or 7 characterized in that components (A) and (B) are present in quantities such that the resultant advanced epoxy resin has an average epoxide equivalent weight of from 350 to 3,000.

10. A coating composition of Claim 9 characterized in that components (A-1) is a diglycidyl ether of a polyoxypropylene glycol said polyoxypropylene glycol having an average molecular weight of from 200 to 400 or dipropylene glycol; component (A-2) is a diglycidyl ether of a bisphenol and component (B) is a bisphenol.

8

11. A coating composition of Claim 10 characterized in that component (A-1) has an average epoxide equivalent weight of from 120 to 260 and component (A-2) is a diglycidyl ether of bisphenol A.

12. A coating composition of Claims 6 to 11 characterized in that component (A-1) is present in quantities of from 10 to 30 percent by weight based upon the combined weight of components (A-1) and (A-2) and components (A) and (B) are employed in quantities such that the resultant advanced epoxy resin has an average EEW of from 350 to 700.

13. A coating composition of Claims 6 to 11 characterized in that component (A-1) is present in quantities of from 70 to 100 percent by weight based upon the combined weight of components (A-1) and (A-2) and components (A) and (B) are employed in quantities such that the resultant advanced epoxy resin has an average EEW of from 1200 to 3000.

14. A coating composition of Claims 6 to 11 characterized in that component (A-1) is present in quantities of from 10 to 50 percent by weight based upon the combined weight of components (A-1) and (A-2) and components (A) and (B) are employed in quantities such that the resultant advanced epoxy resin has an average EEW of from 1400 to 3000.

15. A coating composition of Claim 14 characterized in that component (A-1) is present in quantities of from 10 to 25 percent by weight based upon the combined quantities of components (A-1) and (A-2).

**Patentansprüche**

1. Verbessertes Epoxiharz hergestellt durch Umsetzen in Gegenwart eines geeigneten Katalysators von
(A) einer Zusammensetzung enthaltend
  (1) mindestens ein aliphatisches Diepoxid und
  (2) mindestens ein aromatisches Diepoxid mit
(B) mindestens einer Verbindung, die zwei aromatische Hydroxylgruppen pro Molekül aufweist,
dadurch gekennzeichnet, daß die Bestandteile (A-1) und (A-2) in einer solchen Menge verwendet werden, daß von 10 bis 50% der in Bestandteil (A) vorhandenen Epoxiäquivalente von Bestandteil (A-1) und von 50 bis 90% dieser Epoxiäquivalente von Bestandteil (A-2) beigetragen werden, und der Bestandteil (A-1) in einer Menge von mehr als 20 Gew.-% und weniger als 50 Mol-% der Bestandteile (A-1) und (A-2) vorhanden ist, wobei die Bestandteile (A) und (B) in einer solchen Menge vorhanden sind, daß das verbesserte Epoxiharz ein mittleres Epoxiäquivalentgewicht von 350 bis 30.000 aufweist.

2. Verbessertes Epoxiharz nach Anspruch 1, dadurch gekennzeichnet, daß die Bestandteile (A) und (B) in einem solchen Verhältnis verwendet werden, daß das erhaltene Epoxiharz ein mittleres Epoxiäquivalentgewicht von 350 bis 15.000 aufweist.

3. Verbessertes Epoxiharz nach Anspruch 1, dadurch gekennzeichnet, daß die Bestandteile (A) und (B) in einem solchen Verhältnis verwendet werden, daß das erhaltene Epoxiharz ein mittleres Epoxiäquivalentgewicht von 350 bis 3.000 aufweist.

4. Verbessertes Epoxiharz nach Anspruch 3, dadurch gekennzeichnet, daß der Bestandteil (A-1) ein Diglycidylether eines Polyoxypropylenglycols oder Dipropylenglycols ist; der Bestandteil (A-2) ein Diglycidylether eines Bisphenols und der Bestandteil (B) Bisphenol ist.

5. Verbessertes Epoxiharz nach Anspruch 3, dadurch gekennzeichnet, daß
(a) Bestandteil (A-1) ein mittleres Epoxiäquivalentgewicht von 123 bis 400 aufweist, und
(b) Bestandteil (A-2) ein Diglycidylether von Bisphenol A mit einem mittleren Epoxiäquivalentgewicht von 172 bis 250 ist.

6. Beschichtungszusammensetzung enthaltend
(I) ein verbessertes Epoxiharz hergestellt durch Umsetzen in Gegenwart eines geeigneten Katalysators von
(A) einer Zusammensetzung enthaltend
  (1) mindestens ein aliphatisches Diepoxid und gegebenenfalls
  (2) mindestens ein aromatisches Diepoxid mit
(B) mindestens einer Verbindung, die zwei aromatische Hydroxylgruppen pro Molekül aufweist, wobei die Bestandteile (A-1) und (A-2) in solchen Mengen verwendet werden, daß von 10 bis 100% der in Bestandteil (A) enthaltenen Epoxiäquivalente von Bestandteil (A-1) beigetragen werden, und von 0 bis 90% dieser Epoxiäquivalente von Bestandteil (A-2) beigetragen wird, wobei die Bestandteile (A) und (B) in einer solchen Menge vorhanden sind, daß das erhaltene verbesserte Epoxiharz ein mittleres Epoxiäquivalentgewicht von 350 bis 30.000 aufweist,
(II) eine härtende Menge eines Härtungsmittels für Bestandteil I und
(III) mindestens ein Lösungsmittel in einer solchen Menge, daß die die Bestandteile (I), (II), (III) und jeden weiteren erwünschten Bestandteil enthaltende Beschichtungszusammensetzung eine geeignete Auftragsviskosität aufweist, dadurch gekennzeichnet, daß das Härtungsmittel ein verkapptes Isocyanat ist.

7. Beschichtungszusammensetzung enthaltend
(I) ein verbessertes Epoxiharz, hergestellt durch Umsetzen in Gegenwart eines geeigneten Katalysators von
(A) einer Zusammensetzung enthaltend
  (1) mindestens ein aliphatisches Diepoxid und gegebenenfalls
  (2) mindestens ein aromatisches Diepoxid mit

9

(B) mindestens einer Verbindung, die zwei aromatische Hydroxylgruppen pro Molekül aufweist;

(II) eine härtende Menge eines anderen Härtungsmittels als eines verkappten Isocyanats für Bestandteil (I), und

(III) mindestens ein Lösungsmittel in einer ausreichenden Menge, so daß die die Bestandteile (I), (II), (III) und jeden weiteren erwünschten Bestandteil enthaltende Beschichtungszusammensetzung eine geeignete Auftragsviskosität aufweist,

dadurch gekennzeichnet, daß bei der Herstellung des verbesserten Epoxiharzes die Bestandteile (A-1) und (A-2) in solchen Mengen verwendet werden, daß von 10 bis 50% der in Bestandteil (A) enthaltenen Epoxiäquivalente vom Bestandteil (A-1) beigetragen werden, und von 50 bis 90% dieser Epoxiäquivalente vom Bestandteil (A-2) beigetragen werden, und der Bestandteil (A-1) in einer Menge von mehr als 20 Gew.-% und weniger als 50 Mol-% der Bestandteile (A-1) und (A-2) vorhanden ist, wobei die Bestandteile (A) und (B) in einer solchen Menge vorhanden sind, daß das erhaltene verbesserte Epoxiharz ein mittleres Epoxiäquivalentgewicht von 350 bis 30.000 aufweist.

8. Beschichtungszusammensetzung nach Ansprüchen 6 oder 7, dadurch gekennzeichnet, daß die Bestandteile (A) und (B) in solchen Mengen vorhanden sind, daß das erhaltene verbesserte Epoxiharz ein mittleres Epoxiäquivalentgewicht von 350 bis 15.000 aufweist.

9. Beschichtungszusammensetzung nach Ansprüchen 6 oder 7, dadurch gekennzeichnet, daß die Bestandteile (A) und (B) in einer solchen Menge vorhanden sind, daß das erhaltene verbesserte Epoxiharz ein mittleres Epoxiäquivalentgewicht von 350 bis 3.000 aufweist.

10. Beschichtungszusammensetzung nach Anspruch 9, dadurch gekennzeichnet, daß die Bestandteile (A-1) Diglycidylether eines Polyoxypropylenglycols sind, dessen Polyoxypropylenglycol ein mittleres Molekulargewicht von 200 bis 400 aufweist, oder ein Dipropylenglycol ist; Bestandteile (A-2) ein Diglycidylether von Bisphenol ist und Bestandteil (B) Bisphenol ist.

11. Beschichtungszusammensetzung nach Anspruch 10, dadurch gekennzeichnet, daß Bestandteil (A-1) ein mittleres Epoxiäquivalentgewicht von 120 bis 260 aufweist und Bestandteil (A-2) ein Diglycidylether von Bisphenol A ist.

12. Beschichtungszusammensetzung nach Ansprüchen 6 bis 11, dadurch gekennzeichnet, daß der Bestandteil (A-1) in Mengen von 10 bis 30 Gew.-%, bezogen auf das kombinierte Gewicht der Bestandteile (A-1) und (A-2), vorhanden ist, und die Bestandteile (A) und (B) in solchen Mengen verwendet werden, daß das erhaltene verbesserte Epoxiharz ein mittleres Epoxiäquivalentgewicht von 350 bis 700 aufweist.

13. Beschichtungszusammensetzung nach Ansprüchen 6 bis 11, dadurch gekennzeichnet, daß der Bestandteil (A-1) in Mengen von 70 bis 100 Gew.-%, bezogen auf das kombinierte Gewicht der Bestandteile (A-1) und (A-2), vorhanden ist und die Bestandteile (A) und (B) in solchen Mengen verwendet werden, daß das erhaltene verbesserte Epoxiharz ein mittleres Epoxiäquivalentgewicht von 1.200 bis 3.000 aufweist.

14. Beschichtungszusammensetzung nach Ansprüchen 6 bis 11, dadurch gekennzeichnet, daß der Bestandteil (A-1) in Mengen von 10 bis 50 Gew.-%, bezogen auf das kombinierte Gewicht der Bestandteile (A-1) und (A-2), vorhanden ist, und die Bestandteile (A) und (B) in solchen Mengen verwendet werden, daß das erhaltene verbesserte Epoxiharz ein mittleres Epoxiäquivalentgewicht von 1.400 bis 3.000 aufweist.

15. Beschichtungszusammensetzung nach Anspruch 14, dadurch gekennzeichnet, daß der Bestandteil (A-1) in Mengen von 10 bis 25 Gew.-%, bezogen auf die kombinierten Mengen der Bestandteile (A-1) und (A-2), vorhanden ist.

**Revendications**

1. Résine époxy améliorée qu'on prépare en faisant réagir en présence d'un catalyseur convenable:
(A) une composition comprenant:
    (1) au moins un diépoxyde aliphatique et
    (2) au moins un diépoxyde aromatique, avec
(B) au moins un composé comportant deux groupes hydroxy aromatiques par molécule,
caractérisée en ce que les composants (A-1) et (A-2) sont utilisés en des quantités telles que de 10 à 50% des équivalents époxyde dans le composant (A) sont fournis par le composant (A-1) et de 50 à 90% des équivalents époxyde sont fournis par le composant (A-2), et le composant (A-1) est présent en une proportion supérieure à 20% en poids et inférieure à 50 moles % des composants (A-1) et (A-2), les composants (A) et (B) étant présents en une quantité donnant une résine époxy améliorée ayant un poids moyen d'équivalent époxyde de 350 à 30.000.

2. Résine époxy améliorée selon la revendication 1, caractérisée en ce qu'on utilise les composants A et B en proportions telles que la résine époxy résultante présente un poids moyen d'équivalent époxyde de 350 à 15.000.

3. Résine époxy améliorée selon la revendication 1, caractérisée en ce qu'on utilise les composants A et B en proportions telles que la résine époxy résultante présente un poids moyen d'équivalent époxyde de 350 à 3000.

4. Résine époxy améliorée selon la revendication 3, caractérisée en ce que le composant (A-1) est un éther diglycidylique d'un polyoxypropylène-glycol ou du dipropylène-glycol, le composant (A-2) est un éther diglycidylique d'un bisphénol et le composant (B) est un bisphénol.

5. Résine époxy améliorée selon la revendication 3, caractérisée en ce que:

(a) le composant (A-1) présente un poids moyen d'équivalent époxyde compris entre 123 et 400 et

(b) le composant (A-2) est un éther diglycidylique de bisphénol A présentant un poids moyen d'équivalent époxyde compris entre 172 et 250.

6. Composition de revêtement qui comprend:

(I) une résine époxy améliorée qu'on prépare en faisant réagir, en présence d'un catalyseur convenable, (A) une composition comprenant:

(1) au moins un diépoxyde aliphatique, et facultativement

(2) au moins un diépoxyde aromatique; avec

(B) au moins un composé portant deux groupes hydroxy aromatiques par molécule;

où les composants (A-1) et (A-2) sont utilisés en des quantités telles que 10 à 100% des équivalents époxyde contenus dans le composant (A) sont fournis par le composant (A-1), de 0 à 90% des équivalents époxyde sont fournis par le composant (A-2), les composants (A) et (B) étant présents en une quantité donnant une résine époxy améliorée présentant un poids moyen d'équivalent époxyde de 350 à 30.000;

(II) une quantité efficace d'un agent de durcissement pour le composant (I); et

(III) au moins un solvant en une quantité suffisante pour que la composition de revêtement contenant les composants (I), (II), (III) et tout autre composant désirable présente une viscosité appropriée pour l'application, caractérisé en ce que l'agent de durcissement est un isocyanate bloqué.

7. Composition de revêtement comprenant:

(I) une résine époxy améliorée qu'on prépare en faisant réagir, en présence d'un catalyseur convenable, (A) une composition comprenant:

(1) au moins un diépoxyde aliphatique, et facultativement

(2) au moins un diépoxyde aromatique, avec

(B) au moins un composé portant deux groupes hydroxy aromatiques par molécule;

(II) une quantité efficace d'un agent de durcissement, autre qu'un isocyanate bloqué, pour le composant (I); et

(III) au moins un solvant en une quantité suffisante pour que la composition comprenant les composants (I), (II) et (III) et tout autre composant désirable possède une viscosité appropriée pour l'application, caractérisée en ce que, pour préparer la résine époxy améliorée, on utilise les composants (A-1) et (A-2) en des quantités telles que 10 à 50% des équivalents époxyde contenus dans le composant (A) sont fournis par le composant (A-1), 50 à 90% des équivalents époxyde sont fournis par le composant (A-2), le composant (A-1) étant présent en une proportion supérieure à 20% en poids et inférieure à 50% en moles des composants (A-1) et (A-2), les composants A et B étant présents en une quantité donnant une résine époxy améliorée présentant un poids moyen d'équivalent époxyde de 350 à 30.000.

8. Composition de revêtement selon la revendication 6 ou 7, caractérisée en ce que les composants (A) et (B) sont présents en des quantités telles que la résine époxy améliorée résultante présente un poids moyen d'équivalent époxyde de 350 à 15.000.

9. Composition de revêtement selon la revendication 6 ou 7, caractérisée en ce que les composants A et B sont présents en des quantités telles que la résine époxy améliorée résultante présente un poids moyen d'équivalent époxyde de 350 à 3000.

10. Composition de revêtement selon la revendication 9, caractérisée en ce que le composant (A-1) est un éther diglycidylique d'un polyoxypropylène-glycol, ledit polyoxypropylène-glycol ayant une masse moléculaire moyenne de 200 à 400, ou d'un dipropylène-glycol; le composant (A-2) est un éther diglycidylique d'un bisphénol, et le composant (B) est un bisphénol.

11. Composition de revêtement selon la revendication 10, caractérisée en ce que le composant (A-1) présente un poids moyen d'équivalent époxyde de 120 à 260 et le composant (A-2) est un éther diglycidylique du bisphénol A.

12. Composition de revêtement selon les revendications 6 à 11, caractérisée en ce que le composant (A-1) est présent à raison de 10 à 30% en poids, par rapport au poids combiné des composants (A-1) et (A-2), et les composants A et B sont utilisés en des quantités telles que la résine époxy améliorée résultante présente un PEE moyen de 350 à 700.

13. Composition de revêtement selon les revendications 6 à 11, caractérisée en ce que le composant (A-1) est présent en des quantités de 70 à 100% en poids, par rapport au poids combiné des composants (A-1) et (A-2), et les composants (A) et (B) sont utilisés en des quantités telles que la résine époxy améliorée résultante présente un PEE moyen de 1200 à 3000.

14. Composition de revêtement selon les revendications 6 à 11, caractérisée en ce que le composant (A-1) est présent en des quantités de 10 à 50% en poids, par rapport au poids combiné des composants (A-1) et (A-2), et les composants (A) et (B) sont utilsés en des quantités telles que la résine époxy améliorée résultante présente un PEE moyen de 1400 à 3000.

15. Composition de revêtement selon la revendication 14, caractérisée en ce que le composant (A-1) est présent en une quantité de 10 à 25% en poids, par rapport au poids combiné des composants (A-1) et (A-2).